# EUROPEAN PATENT APPLICATION

(11) **EP 4 592 179 A1**
(43) Date of publication of application: **30.07.2025**
(21) Application number: 25153308.9
(22) Date of filing: 22.01.2025
(51) Int. Cl.: B64D 11/06

(54) **PASSENGER SEAT WITH COUPLED LINKAGE AND CRADLED RECLINE MOTION**

(30) Priority: 26.01.2024 US 202463625506 P; 01.11.2024 US 202418934972
(71) Applicant: B/E Aerospace, Inc., Winston-Salem, NC 27105 (US)
(72) Inventor: RALPH, Neil M., Winston-Salem, NC (US); MALATRASI, Gianpaolo, Rural Hall, NC (US); ANELLO, Fabio B., Lewisville, NC (US); MCKEE, Eric M., Oak Ridge, NC (US); SUHRE, Ryan J., Winston-Salem, NC (US)
(74) Representative: Dehns

(57) **Abstract**

A passenger seat (102) such an aircraft passenger seat configured to be part of a row of seats (100). The passenger seat includes a frame assembly (104) including fixed spreaders (106), and a seat back (116) and a seat bottom (114) positioned between the fixed spreaders and pivotably attached at a shifting pivot (126). Upper and lower links (130, 128), provided in a symmetrical arrangement on both sides of the seat, pivotably attach the seat back and the shifting pivot to the fixed spreaders in a manner such that the shifting pivot lowers and moves forward as the passenger seat transition from upright to reclined to provide a cradled recline seat motion.

## Description

### TECHNICAL FIELD AND BACKGROUND

The present disclosure relates generally to a passenger seat such as an aircraft passenger seat, and more particularly, to a passenger seat including a linkage arrangement for synchronizing seat back and seat pan motions to provide a cradled recline seat motion and sitting position.

Passenger seats such as aircraft passenger seats often recline to increase passenger comfort. On short haul flights, recline motion may be limited to the seat back. On long haul flights, recline motion may include the seat back and the seat pan. In either case, in traditional passenger seat constructions, the seat back pivots around a single fixed axis. A single fixed axis requires the seat pan to be decoupled from the seat back, and a separate mechanism to translate the seat pan forward and aft.

Seat backs that pivot around a single fixed axis do not follow the natural pivot of the human back and therefore are uncomfortable during the transition from upright to reclined, and the use of a forward translating seat pan in conjunction with a pivoting seat back does not provide a comfortable sitting position over time. In addition, traditional mechanisms for translating a seat pan forward and aft use roller bearings that travel along track or slots formed in the seat frame, which is an expensive mechanism to implement and complicates the seat construction.

Therefore, what is needed is a way to tie seat back and seat pan motion together to maintain a comfortable positional relationship during seat recline and thereafter, and in a way that does not encroach into the surrounding passenger space.

### BRIEF SUMMARY

According to one aspect, the inventive concepts according to the present disclosure are directed to an aircraft passenger seat with cradled recline motion. In embodiments, the seat includes a frame subassembly including fixed spreaders and at least one transverse beam, a seat back positioned between the fixed spreaders, and a seat pan positioned between the fixed spreaders, wherein the seat pan and the seat back are coupled together at a shifting pivot. In embodiments, a linkage arrangement includes lower links positioned on opposite lateral sides of the seat back, each lower link pivotably attached at a first end to one of the fixed spreaders and pivotably attached at a second end to the shifting pivot, and upper links positioned on opposite lateral sides of the seat back, each upper link pivotably attached at a first end to one of the fixed spreaders and pivotably attached at a second end to the seat back.

In some embodiments, one of the fixed spreaders, the seat back, one of the lower links, and one of the upper links forms a four-bar linkage on each lateral side of the aircraft passenger seat, and in use, the four-bar linkages coordinate and control seat motion between an upright sitting position and a cradled recline sitting position.

In some embodiments, as the aircraft passenger seat transitions from the upright sitting position to the cradled recline sitting position, motion of the shifting pivot includes synchronous downward and forward motion, and as the aircraft passenger seat transitions from the cradled recline sitting position to the upright sitting position, motion of the shifting pivot includes synchronous upward and aft motion.

In some embodiments, each of the upper links and the lower links are inclined in a forward direction.

In some embodiments, the seat pan is pivotably attached to a link pivotably attached to the shifting pivot.

In some embodiments, the passenger seat further includes a lockable gas spring positioned under the seat pan, one end of the lockable gas spring pivotably attached to the frame subassembly, and an opposing end of the lockable gas spring pivotably attached to the seat pan.

In some embodiments, the passenger seat further includes, on each lateral side of the seat back, a meal table support arm pivotably attached to the pivotable attachment of the second end of the upper link to the seat back.

In some embodiments, the frame subassembly includes a forward transverse beam supporting a forward end of the seat pan from below, and an aft transverse beam mechanically decoupled from the seat pan and the seat back, wherein each of the forward and aft transverse beams are attached to the fixed spreaders.

In some embodiments, the passenger seat further includes an armrest pivotably attached to each of the fixed spreaders.

According to another aspect, the inventive concepts according to the present disclosure are directed to a row of passenger seats including a frame subassembly including a plurality of fixed spreaders and at least one transverse beam, and at least two laterally adjacent passenger seats, each passenger seat in the row positioned between two of the fixed spreaders, and each passenger seat including a seat back, a seat pan coupled to the seat back at a movable pivot, lower links positioned on opposite lateral sides of the seat back, each lower link pivotably attached at a first end to one of the fixed spreaders and pivotably attached at a second end to the shifting pivot, and upper links positioned on opposite lateral sides of the seat back, each upper link pivotably attached at a first end to one of the fixed spreaders and pivotably attached at a second end to the seat back.

In some embodiments, the row includes three laterally adjacent passenger seats, and the frame subassembly includes four fixed spreaders, a forward transverse beam attached to the four fixed spreaders, an aft transverse beam attached to the four fixed spreaders, and two leg assemblies attached to at least one of the forward transverse beam, the aft transverse beam, and the four fixed spreaders.

In some embodiments, the row of passenger seats includes four armrests wherein each armrest is pivotably attached to one of the fixed spreaders.

According to another aspect, the inventive concepts according to the present disclosure are directed to a reclinable passenger seat attachable between fixed spreaders. In embodiments, the passenger seat includes a seat back and a seat bottom for positioning between the fixed spreaders, the seat back and the seat bottom attached together at a shifting pivot, lower links movably coupling the shifting pivot to the fixed spreaders, each lower link pivotably attachable at a first end to one of the fixed spreaders and pivotably attached at a second end to the shifting pivot, and upper links movably coupling the seat back to the fixed spreaders, each upper link pivotably attachable at a first end to one of the fixed spreaders and pivotably attached at a second end to the seat back.

This summary is provided solely as an introduction to subject matter that is fully described in the following detailed description and drawing figures. This summary should not be considered to describe essential features nor be used to determine the scope of the claims. Moreover, it is to be understood that both the foregoing summary and the following detailed description are explanatory only and are not necessarily restrictive of the subject matter claimed.

### BRIEF DESCRIPTION OF THE DRAWINGS

Implementations of the inventive concepts disclosed herein may be better understood when consideration is given to the following detailed description thereof. Such description refers to the included drawings, which are not necessarily to scale, and in which some features may be exaggerated and some features may be omitted or may be represented schematically in the interest of clarity. Like reference numerals in the drawings may represent and refer to the same or similar element, feature, or function. In the drawings:
FIG. 1 is a front isometric view of a seat row including a plurality of passenger seats each configured for cradled recline seat motion, in accordance with example embodiments of this disclosure;
FIG. 2 is a rear isometric view of the seat row showing one of the seat back removed to show the linkage providing the cradled recline seat motion, in accordance with example embodiments of this disclosure;
FIG. 3 is a front view of the seat row showing one of the seat pan cushions removed to show the seat pan, in accordance with example embodiments of this disclosure;
FIG. 4 is a fragmentary side view of one of the passenger seats shown with the nearest spreader removed for clarity, in accordance with example embodiments of this disclosure;
FIG. 5 is a side view of one of the passenger seats shown in an upright sitting position, in accordance with example embodiments of this disclosure;
FIG. 6 is a side view of one of the passenger seats shown in a cradled recline sitting position, in accordance with example embodiments of this disclosure;
FIG. 7 is a side view of one of the passenger seats shown with the upright and cradled recline sitting positions overlaid for comparison, in accordance with example embodiments of this disclosure;
FIG. 8 is a fragmentary bottom perspective view of the seat row showing a lockable gas spring, in accordance with example embodiments of this disclosure; and
FIG. 9 is a side view of one of the passenger seats equipped with the linkage in a breakover condition.

### DETAILED DESCRIPTION

Before explaining at least one embodiment of the inventive concepts disclosed herein in detail, it is to be understood that the inventive concepts are not limited in their application to the details of construction and the arrangement of the components or steps or methodologies set forth in the following description or illustrated in the drawings. In the following detailed description of embodiments of the instant inventive concepts, numerous specific details are set forth in order to provide a more thorough understanding of the inventive concepts. However, it will be apparent to one of ordinary skill in the art having the benefit of the instant disclosure that the inventive concepts disclosed herein may be practiced without these specific details. In other instances, well-known features may not be described in detail to avoid unnecessarily complicating the instant disclosure. The inventive concepts disclosed herein are capable of other embodiments or of being practiced or carried out in various ways. Also, it is to be understood that the phraseology and terminology employed herein is for the purpose of description and should not be regarded as limiting.

As used herein, a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only, and should not be construed to limit the inventive concepts disclosed herein in any way unless expressly stated to the contrary.

Further, unless expressly stated to the contrary, "or" refers to an inclusive or and not to an exclusive or. For example, a condition A or B is satisfied by anyone of the following: A is true (or present) and B is false (or not present), A is false (or not present) and B is true (or present), and both A and B are true (or present).

In addition, use of the "a" or "an" are employed to describe elements and components of embodiments of the instant inventive concepts. This is done merely for convenience and to give a general sense of the inventive concepts, and "a" and "an" are intended to include one or at least one and the singular also includes the plural unless it is obvious that it is meant otherwise.

Finally, as used herein any reference to "one embodiment" or "some embodiments" means that a particular element, feature, structure, or characteristic described in connection with the embodiment is included in at least one embodiment of the inventive concepts disclosed herein. The appearances of the phrase "in some embodiments" in various places in the specification are not necessarily all referring to the same embodiment, and embodiments of the inventive concepts disclosed may include one or more of the features expressly described or inherently present herein, or any combination of sub-combination of two or more such features, along with any other features which may not necessarily be expressly described or inherently present in the instant disclosure.

Broadly, embodiments of the inventive concepts disclosed herein are directed to a passenger seat, which may be an aircraft passenger seat, a stand-alone passenger seat, a passenger seat that is part of a row of seats, etc. In embodiments, the passenger seat articulates via links versus a traditional single fixed axis or guided mechanisms. In embodiments, the passenger seat motion between an upright sitting position and a cradled recline position is controlled by synchronizing the rotational motions of upper and lower links. In embodiments, the seat pan and the seat bottom are pivotably attached at a shifting pivot, the lower links attach to the shifting pivot and to the fixed seat frame, and the upper links attach to the seat back and to the fixed frame. In this configuration, the complex synchronous rotations of the links and the shifting pivot allows the seat back and seat pan motions to be tied together to maintain a comfortable cradled recline motion during recline.

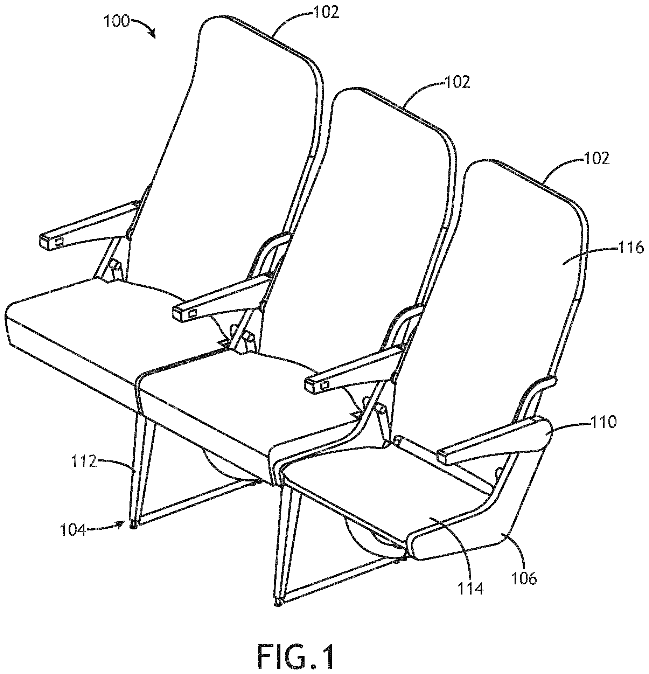

FIGS. 1-3 illustrate a row of seats 100 including a plurality of laterally adjacent passenger seats 102. In embodiments, the row of seats 100 can include a single passenger seat, two passenger seats, three passenger seats, and more than three passenger seats. A row of three seats is shown as three seat rows are commonly used in passenger aircraft. The row of seats 100 includes a frame subassembly 104 generally including fixed spreaders 106 and at least one transverse beam 108. As shown, the row of seats 100 includes four fixed spreaders 106 wherein each passenger seat 102 is positioned between two fixed spreaders 106. The row of seats 100 may include armrests 110, wherein each armrest 110 is pivotably or otherwise mounted to one of the fixed spreaders 106. The frame subassembly 104 may further include legs 112 for being mounted to the floor, for instance using track fasteners. In embodiments, the legs 112 may be positioned for support and to demarcate footwell space for aft-seated passengers.

Each passenger seat includes a seat pan 114 and a seat back 116. The seat pan 114 and the seat back 116 are mechanically coupled for synchronous motion. For instance, driving the seat pan 114 may drive the seat back 116, and vice versa. In embodiments, the aft end of the seat pan 114 is pivotably attached to the bottom end of the seat back 116 at a shifting pivot as discussed below. For each passenger seat 102, the seat pan 114 and the seat back 116 are positioned between two of the fixed spreaders 106, and the fixed spreader 106 between laterally adjacent passenger seats 102 may be shared.

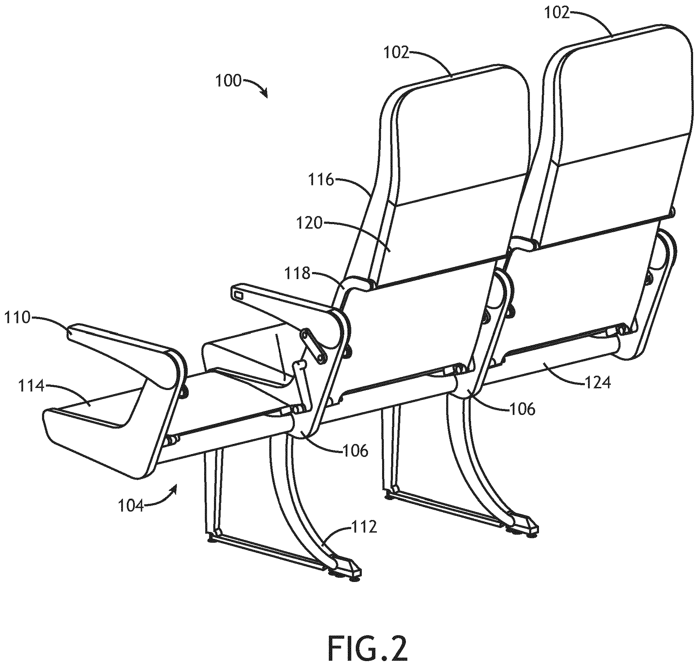

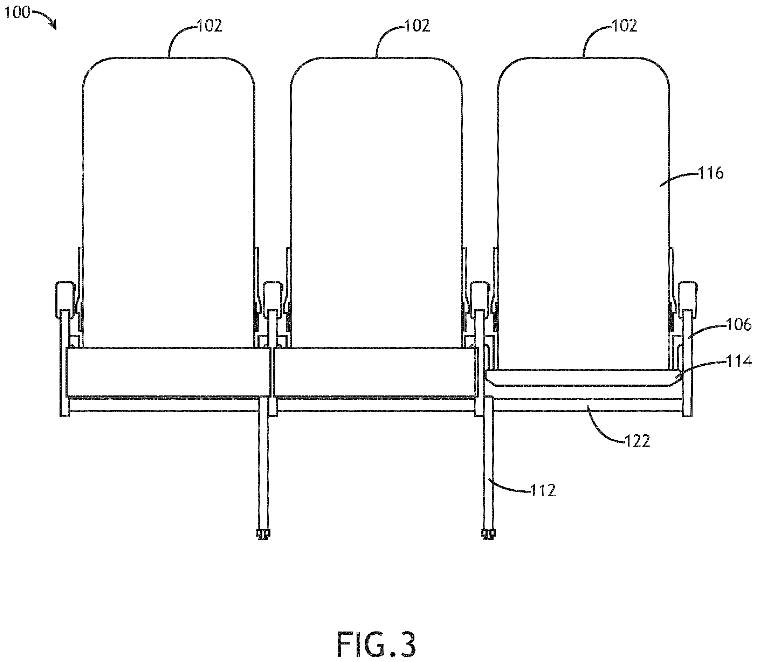

With specific reference to FIG. 2, in embodiments, each passenger seat 102 may be equipped with a meal table assembly including a pair of support arms 118 movably mounting a meal table 120 to the backside of the seat back 116. In use, the support arms 118 are configured to move the meal table 120 between a stowed position against the seat back 116 and a deployed position apart from the seat back 116. The frame subassembly 104 may include a forward transverse beam (122 in FIG. 3) and an aft transverse beam (124 in FIG. 2) each of which span the length of the row of seats 100 and are attached to each of the spreaders 106. FIGS. 2 and 3 further shows one passenger seat 102 with the seat bottom cushion removed to show the linkage configuration providing the seat motion as discuss further below.

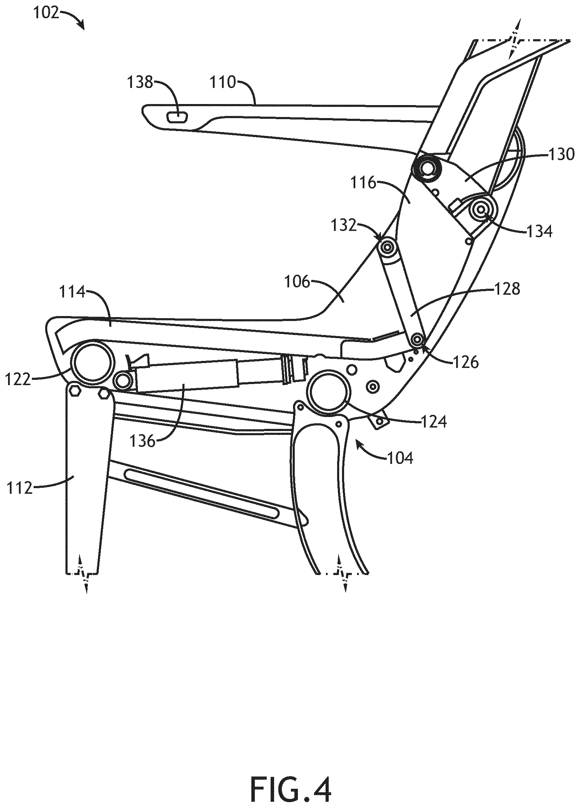

FIG. 4 illustrates one of the passenger seats 102 with the nearest spreader removed for clarity. The seat pan 114 and the seat back 116 are coupled at a shifting pivot 126. The term 'shifting' as used herein denotes a pivot connection that is not fixed but moves as the seat transition between the different sitting positions. Seat motion is coordinated by links including lower links 128 and upper links 130 movably coupling the coupled seat pan 114 and seat back 116 to the fixed frame subassembly 104. In embodiments, the lower links 128 and the upper links 130 are provided as pairs with one of each link type positioned on one lateral side of the seat back 116 to provide a symmetrical arrangement on opposite lateral sides of the passenger seat 102.

Each lower link 128 is pivotably attached at a first end to one of the fixed spreaders 106 at a first fixed axis 132, and a second end to the shifting pivot 126. Each upper link 130 is pivotably attached at a first end to one of the fixed spreaders 106 at a second fixed axis 134, and a second end to the seat back 116. In this configuration, on each side of the passenger seat 102, one of the lower links 128, one of the upper links 130, the seat back 116, and the fixed spreader 106 together form a four-bar linkage for controlling the seat motion. As shown, each of the lower links 128 and the upper links 130 are inclined in a forward direction and are configured to rotate about their respective fixed axis 132, 134. At the same time the lower links 128 rotate, the shifting pivot 126 is configured to move along a motion path in a controller manner as discussed below.

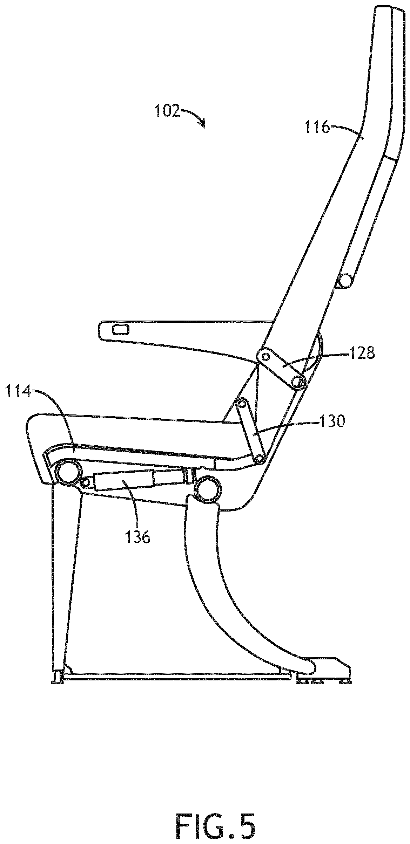

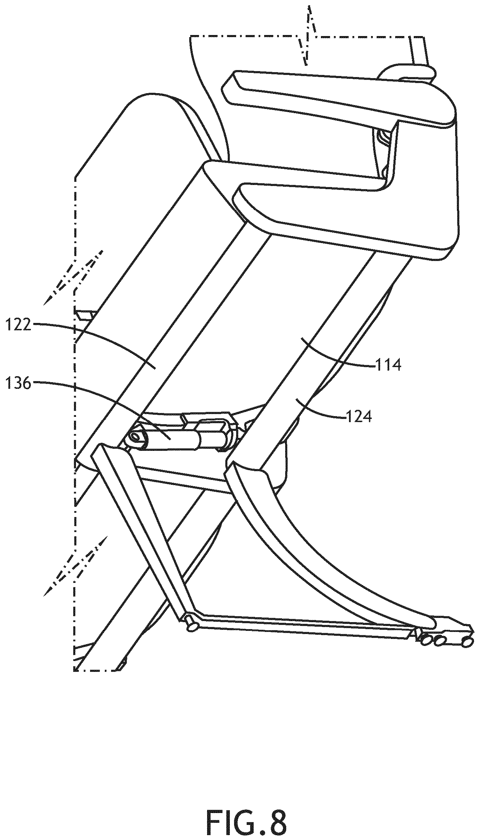

With reference to FIGS. 5 and 8, in embodiments, each passenger seat 102 may further include a lockable gas spring 136 for locking and damping seat motion. In embodiments, the lockable gas spring 136 may be positioned under the seat pan, and may be pivotably attached at one end to the frame subassembly 104 and pivotably attached at the opposing end to the seat pan 114. The lockable gas spring 136 may be actuated by a cable, for instance a Bowden style cable, translated by an actuator 138 typically located in the armrest 110. In use, the actuator 138 may be depressed to unlock the lockable gas spring 136 and released to lock the passenger seat 102 in its current sitting position. FIG. 4 further illustrates a particular beam tube configuration including a forward transverse beam 122 and an aft transverse beam 124 each implemented as a beam tube received through openings formed in the spreaders 106, and in some embodiments, also through openings formed in the legs 112. As shown, each of the seat pan 114 and the seat back 116 are positioned above and detached from the aft transverse beam 124 such that the shifting pivot 126 can move relative to the frame subassembly 104.

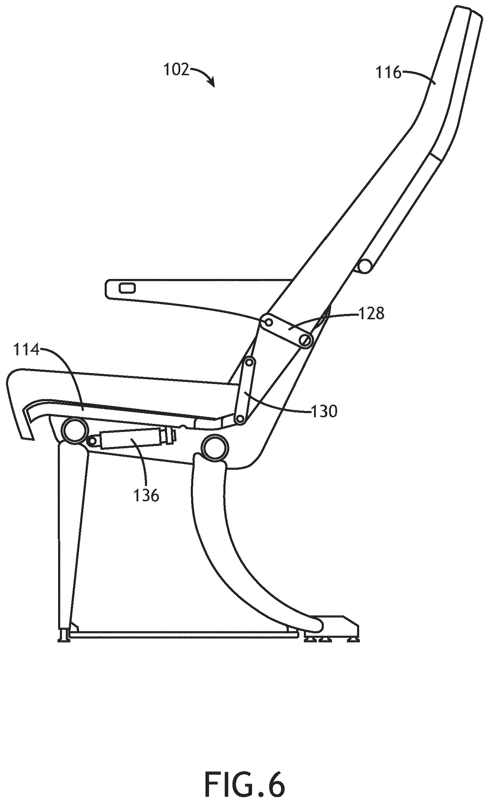

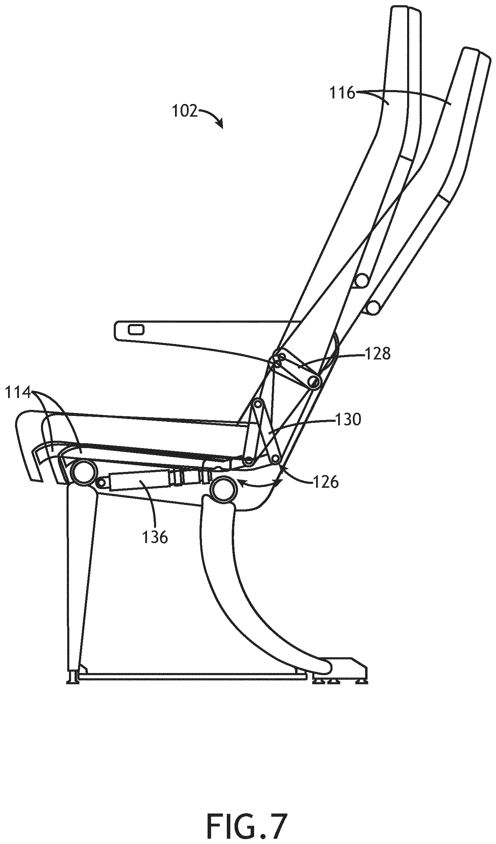

FIGS. 5-7 illustrate the seat motion. FIG. 5 shows the passenger seat 102 in an upright sitting position in preparation for taxi, takeoff, and landing (TTOL or TTL). FIG. 6 shows the passenger seat 102 in a cradled recline sitting position during flight. FIG. 7 shows the upright sitting position and the cradled recline sitting position overlaid for comparison. When in the upright sitting position, the seat back 116 is nearest vertical and the seat pan 116 is shifted aft. When in the reclined sitting position, the seat back 116 is rotated in the direction of horizontal and the seat pan 114 is shifted forward. In some embodiments, the passenger seat 102 may be locked in any position between the fully upright sitting position and the reclined sitting position by the lockable gas spring 136.

FIG. 7 illustrates the synchronous rotational motions of the lower link 128 and the upper link 130. In use, as the passenger seat 102 transitions from the upright sitting position to the cradled recline sitting position, the upper link 130 rotates to become less inclined, and the lower link 128 rotates forward to move the shifting pivot 126 downward and forward. In use, as the passenger seat 102 transitions from the cradled recline sitting position to the upright sitting position, the upper link 130 rotates to become more inclined, and the lower link 128 rotates aft to move the shifting pivot 126 aft and upward. In this configuration, a more comfortable and natural positional relationship is maintained as the passenger seat 102 transitions between upright and reclined. Further shown in FIG. 7, the lower portion of the seat back 116 does not intrude into the passenger space behind the seat when at full recline, thereby reducing recline guilt and increasing recline in tapered sections in the last row of seats, among other advantages.

In embodiments, seat pan and seat back motions are synchronized such that the seat pan 114 shifts forward as the seat back 116 reclines, and vice versa. In some embodiments, the seat pan 114 may also change in tilt as the seat back 116 reclines to maintain or change the cradle angle.

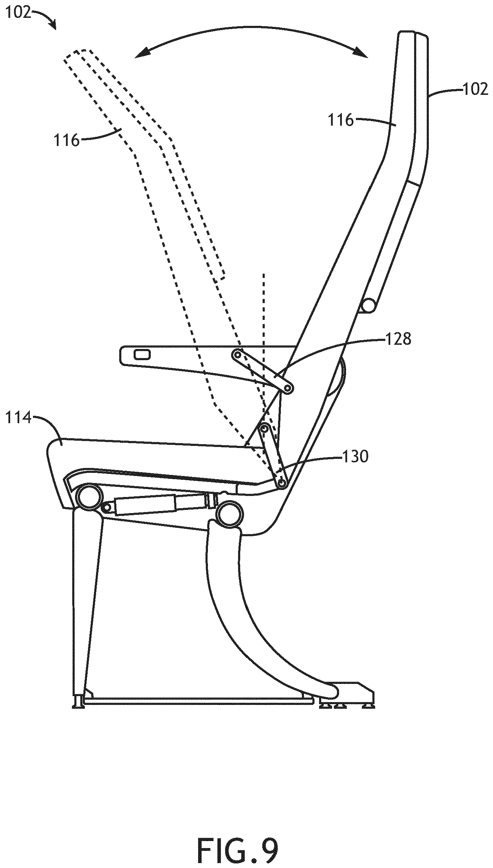

FIG. 9 illustrates a particular arrangement of the lower and upper links 128, 130 in a configuration to provide dynamic breakover during a sudden deceleration event. During normal use of the passenger seat 102 (i.e., regular use in the absence of a qualifying sudden deceleration), the seat back 116 may be controlled to rotate around the arc path of the lower links 128. During normal use, the lower links 128 and the upper links 130 rotate in a synchronous manner to provide the desired motion between the upright sitting position and the cradled recline sitting position, as well as the resultant positions of the seat pan 114 and the seat back 116 in each of the sitting positions as well as in intermediate sitting positions. By controlling the seat motion with links as opposed to a fixed pivot axis, the seat motion is more customizable.

During a dynamic event (e.g., extreme force on the seat back 116), when the passenger seat 102 is locked in the upright sitting position for TTOL, for instance by the lockable gas spring 136, the lower links 128 are fixed. When the load on the seat back 116 exceeds a predefined threshold load value, the upper links 130 are constrained to rotate in the forward direction to rotate the seat back 116 forward past the upright sitting position. When the forward seat back motion is complete, the seat back 116 comes to rest in the forward position as shown by the dashed lines.

The forward seat back motion is made possible by the fixed lower links 128 and the configuration of the upper links 130 that causes the constrained upper links 130 to rotate around the arc path of the lower links 128. The upper links 130, constrained at their attached ends to the spaced frame members, are caused to rotate over center of the pivot axis of the seat bottom/seat back. In some embodiments, the upper links 130 may deform (e.g., stretch) to absorb energy during a first portion of forward rotation, and as the upper links 130 reach their rotational apex and rotate over center, the elastic modulus of the upper links 130 may cause the stretched upper links 130 to relax and want to revert to their original state. By temporarily deforming the upper links 130, the seat back 116 is able to rotate forward past a point in which the seat back 116 is unable to rotate back toward the upright position, thereby facilitating seat egress. In some embodiments, the link lengths, shapes, thickness materials, inclinations, relative positions, etc., may be customized to achieve the desired recline and breakover motions.

From the above description, it is clear that the inventive concepts disclosed herein are well adapted to achieve the objectives and to attain the advantages mentioned herein as well as those inherent in the inventive concepts disclosed herein. While presently preferred embodiments of the inventive concepts disclosed herein have been described for purposes of this disclosure, it will be understood that numerous changes may be made which will readily suggest themselves to those skilled in the art and which are accomplished within the broad scope and coverage of the inventive concepts disclosed and claimed herein.

## Claims

1. An aircraft passenger seat (102), comprising:
a frame subassembly (104) including fixed spreaders (106) and at least one transverse beam (108);
a seat back (116) positioned between the fixed spreaders; and
a seat pan (114) positioned between the fixed spreaders, the seat pan and the seat back coupled together at a shifting pivot (126);
**characterized in that** the aircraft passenger seat includes:
lower links (128) positioned on opposite lateral sides of the seat back, each lower link pivotably attached at a first end to one of the fixed spreaders and pivotably attached at a second end to the shifting pivot; and
upper links (130) positioned on opposite lateral sides of the seat back, each upper link pivotably attached at a first end to one of the fixed spreaders and pivotably attached at a second end to the seat back.

2. The aircraft passenger seat (102) according to claim 1, wherein:
one of the fixed spreaders (106), the seat back (116), one of the lower links (128), and one of the upper links (130) forms a four-bar linkage on each lateral side of the aircraft passenger seat; and
in use, the four-bar linkages control seat motion between an upright sitting position and a cradled recline sitting position.

3. The aircraft passenger seat (102) according to claim 2, wherein:
as the aircraft passenger seat transitions from the upright sitting position to the cradled recline sitting position, motion of the shifting pivot (126) includes synchronous downward and forward motion; and
as the aircraft passenger seat transitions from the cradled recline sitting position to the upright sitting position, motion of the shifting pivot (126) includes synchronous upward and aft motion.

4. The aircraft passenger seat (102) according to claim 1, 2 or 3, wherein each of the upper links (130) and the lower links (128) are inclined in a forward direction.

5. The aircraft passenger seat (102) according to claim 1, 2, 3 or 4, wherein the seat pan (1140 is pivotably attached to a link pivotably attached to the shifting pivot.

6. The aircraft passenger seat (102) according to any preceding claim, further comprising a lockable gas spring (136) positioned under the seat pan, one end of the lockable gas spring pivotably attached to the frame subassembly, and an opposing end of the lockable gas spring pivotably attached to the seat pan.

7. The aircraft passenger seat (102) according to any preceding claim, further comprising, on each lateral side of the seat back, a meal table support arm (118) pivotably attached to the pivotable attachment of the second end of the upper link to the seat back.

8. The aircraft passenger seat (102) according to any preceding claim, wherein the frame subassembly (104) comprises:
a forward transverse beam (122) supporting a forward end of the seat pan from below;
an aft transverse beam (124) mechanically decoupled from the seat pan and the seat back; and
each of the forward and aft transverse beams attached to the fixed spreaders.

9. The aircraft passenger seat (102) according to any preceding claim, further comprising an armrest (110) pivotably attached to each of the fixed spreaders.

10. The aircraft passenger seat (102) according to any preceding claim, included in a row (100) of like passenger seats.
